# EUROPEAN PATENT APPLICATION

(11) **EP 2 124 391 A1**
(43) Date of publication of application: **25.11.2009**
(21) Application number: 07816674.1
(22) Date of filing: 26.10.2007
(51) Int. Cl.: H04L 12/28, H04L 29/06

(54) **SERVEP P2P NETWORK SYSTEM AND METHOD FOR ROUTING AND TRANSFERING THE RESOURCE KEY ASSIGNMENT THEREOF**

(30) Priority: 18.01.2007 CN 200710062843
(71) Applicant: Huawei Technologies Co., Ltd., Longgang District, Shenzhen Guangdong 518129 (CN)
(72) Inventor: GUAN, Hongguang, Shenzhen Guangdong 518129 (CN)
(74) Representative: Pfenning, Meinig & Partner GbR
(86) International application number: PCT/CN2007/003061
(87) International publication number: WO 2008/089616

(57) **Abstract**

A server, a P2P network system, a method for routing, and a method for transferring resource key assignment are provided. The server comprises a routing processing module and a storage module connected therewith. The P2P network system comprises a structured P2P network and a server configured therein. The server routes the searching node to the node storing the resource key assignment based on the stored information, to thereby achieve a quick route. The method for routing is realized by searching for the node storing the resource key assignment via the server. Therefore, it merely takes two hops, i.e., the server and the node storing the resource key assignment, for the node to find the resource key assignment in search. The method for transferring resource key assignment is realized by duplicating or deleting, when the node is joined or is leaving, the resource key assignment under the charge of the node, and notifying the server, in order to ensure that the node information in the storage module is updated in time, and to ensure that the node may search out the node storing the resource key assignment promptly and accurately.

## Description

### FIELD OF THE INVENTION

The present invention relates to IP network technical field, and more specifically, to server, P2P network system, and method for routing and transferring resource key assignment thereof.

### BACKGROUND

Peer-to-Peer (P2P) network has changed traditional client/server models. In a P2P network, resources are stored in various nodes. These peers are of equivalent status in the network. Resources are transferred directly between the nodes. Each node in the network may both provide services to other nodes and receive services provided from other nodes.

According to different resource storing and searching modes of nodes, P2P network can be classified into two broad categories, structured P2P and unstructured P2P.

In an unstructured P2P network, each node merely stores the resource of itself and does not know the nodes where other resources are stored. When a node needs to obtain resources in a P2P network, a method of flooding mode is utilized for searching for the resources.

A structured P2P network utilizes a Distributed Hash Table (DHT) algorithm to perform resource storing and searching. The key point of DHT algorithm is to obtain a resource key assignment by performing DHT operation on the characters (i.e. the keywords) of the resources (i.e. the stored objects). Simultaneously, each node obtains a node identifier (NodeID) by performing DHT operation. The range of the node's NodeID is equal to that of the resource key assignment. A resource key assignment is stored in a node closest to the NodeID, for instance, a node with its NodeID greater than the key assignment and closest to the key assignment. The corresponding relationship between the resource key assignment and description information of the node storing the resource actually (i.e. IP address, etc.) is stored together in a node. As long as the node storing the resource key assignment is found, the node storing the resource can be found according to the corresponding relationship between them. In a structured P2P network, each node stores a certain resource key assignments and part of node list information. When nodes need to obtain the resource, they perform DHT operation on the resource keywords. After the resource key assignment is obtained, the node storing the resource key assignment is found hop-by-hop based on the stored node list information. Eventually, the resource is found via the resource key assignment.

When searching for the resource in a structured P2P network, based on the node list of the nodes and the resource key assignment obtained by performing DHT operation on the resource keywords, the node storing the resource key assignment can be found. Therefore, the required resource will be found according to the corresponding relationship between the stored resource key assignment and the description information of the node storing the resource. The node list may reduce the number of hops for searching for the key assignment and improve the efficiency of resource key assignment searching.

The disadvantages with above mentioned solution lie in that, the method of flooding resource searching utilized by the unstructured P2P network can not guarantee to search out the resource eventually. Although the structured P2P network may search out the resource eventually by the resource key assignment, and the efficiency is improved to a certain extent compared to the unstructured P2P network; in some real-time services, for example, a Voice over IP (VOIP) service, with a short connection time of user, however, the resource searching efficiency can still hardly satisfy the requirements. Furthermore, in a structured P2P network, each node merely stores part of node information. Therefore, when searching for the resource key assignment, it needs several hops to search out the node storing the key assignment. In addition, as P2P network is an open network, malicious nodes or bug (problem or drawback in program destroying normal operation ability of network) nodes may cause false node routing information. Thus eventually, the node storing the resource key assignment may not be found correctly.

### SUMMARY

A server, a P2P network, a method for routing in a P2P network and a method for transferring resource key assignment in a P2P network are provided in embodiments of the present invention to solve the problem in the prior art of low efficiency of searching for the node storing the resource key assignment in a structured P2P network.

A server according to an embodiment of the present invention includes a routing processing module and a storage module connected therewith, wherein the storage module is configured to store node identifiers (NodeIDs) of all nodes in a structured P2P network, and the routing processing module is configured to search out, upon receipt of a request from a node for searching for a resource key assignment, a node storing the resource key assignment based on the NodeIDs stored in the storage module, and to route the node sending the request for searching for the resource key assignment to the node storing the resource key assignment.

A P2P network system according to an embodiment of the present invention, includes a structured P2P network, wherein, a server is configured in the structured P2P network, and the server is connected with all nodes via signals within the structured P2P network, and the server is configured to search out, upon receipt of a request for searching for a resource key assignment, a node storing the resource key assignment based on NodeID of all nodes stored in the structured P2P network, and to route a node sending the request for searching for the resource key assignment to the node storing the resource key assignment.

A method for routing in a P2P network according to an embodiment of the present invention, includes the following steps:
Step 1: A server in the P2P network searches for a node storing a resource key assignment based on the resource key assignment in a request and stored NodeID, upon receipt of the request initiated by a node searching for the resource key assignment;
Step 2: The server routes the node initiating the request for searching to the found node.

A method for transferring resource key assignment in a P2P network according to an embodiment of the present invention, includes following steps:
sending, by a newly joined node, a request for duplicating a resource key assignment to its successor neighbor node;
transmitting, by the successor neighbor node, the resource key assignment to the newly joined node, wherein the resource key assignment is under the charge of the newly joined node;
deleting, by the successor neighbor node, the resource key assignment under the charge of the newly joined node; and
notifying, by the newly joined node, the server that transferring of the resource key assignment is completed, upon receipt of the resource key assignment.

A method for transferring resource key assignment in a P2P network according to another embodiment of the present invention, includes following steps:
transmitting, by a leaving node, all resource key assignments under the charge of itself to its neighbor node;
notifying, by the neighbor node, the leaving node, upon receipt of the resource key assignments;
notifying, by the leaving node, the server of the leaving information, upon receipt of the notification from the neighbor node.

Based on the server provided by the embodiments of the present invention, the nodes in the structured P2P network or any external nodes may be routed to the node storing the resource key assignment via the server.

Base on the P2P network system provided by the embodiments of the present invention, when a node in the P2P network system is searching for the resource key assignment via the server, the server directly routes the node to the node storing the resource key assignment based on the stored NodeID and node status information of all nodes. It greatly saves the time for routing and speeds up the search of the resource key assignment.

Based on the method for routing in a P2P network provided by the embodiments of the present invention, a node initiating the request for searching takes merely two hops, i.e., the server and the found node, to search out the resource key assignment. It greatly saves the time for routing and improves the efficiency of searching for the resource in the P2P network.

Based on the method for transferring resource key assignment in a P2P network provided by the embodiments of the present invention, the resource key assignment under the charge of the newly joined node is duplicated to the node when the node is joined, and is notified to the server. Thus, the server may update the stored nodes' NodeIDs and node status information in time to ensure that the node may search out the node storing the resource key assignment promptly and accurately via the server. Before leaving the structured P2P network system, the node duplicates the stored resource key assignment to its neighbor node and notifies the server, so that the server can update the stored nodes' NodeIDs and the node status information, thereby ensuring that the node may search out the node storing the resource key assignment promptly and accurately via the server.

### BRIEF DESCRIPTION OF THE DRAWING(S)

Figure 1 illustrates a structural schematic diagram of a preferred embodiment of a server provided by an embodiment of the present invention;

Figure 2 illustrates a structural schematic diagram of another preferred embodiment of a server provided by an embodiment of the present invention;

Figure 3 illustrates a structural schematic diagram of a preferred embodiment of a P2P network system provided by an embodiment of the present invention;

Figure 4 illustrates a structural schematic diagram of a P2P network, in which a preferred embodiment of a method for routing is applied, in a P2P network provided by an embodiment of the present invention;

Figure 5 illustrates a flowchart of a preferred embodiment of a method for routing in a P2P network provided by an embodiment of the present invention;

Figure 6 illustrates a flowchart of guaranteeing routing reliability of a method for routing in a P2P network provided by an embodiment of the present invention; and

Figure 7 illustrates a flowchart of correctly searching for a node storing resource key assignment in the case of abnormal leaving of node in a method for routing in a P2P network provided by an embodiment of the present invention.

### DETAILED DESCRIPTION

In following description, in order to distinguish between an identifier of a resource key assignment and an identifier of a node, a K is added in front of a resource key assignment identifier, and an N is added in front of a node identifier.

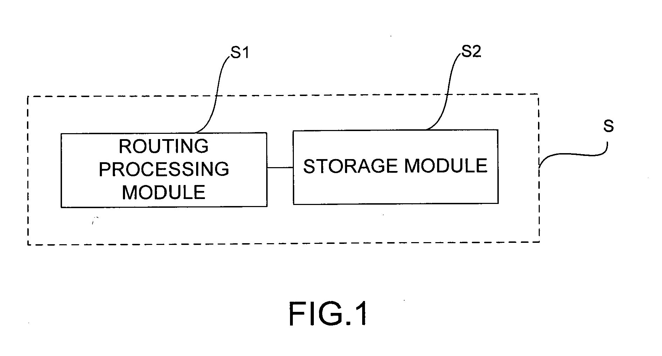

Figure 1 illustrates a structural schematic diagram of a preferred embodiment of a server of the present invention. A server S includes: a routing processing module S1 and a storage module S2 connected therewith. The storage module S2 is configured to store NodeIDs and node status information of all nodes in a P2P network. The routing processing module S1 is configured to route a node searching for a resource key assignment to a node storing the source key assignment, based on the stored NodeIDs and node status information in the storage module S2. That is, when receiving a request for searching for the resource key assignment initiated from a node, a node storing the resource key assignment is found among nodes in normal status based on the resource key assignment in the request and the NodeIDs stored in the storage module S2, and the request for searching the resource key assignment is routed to the node storing the resource key assignment. Then, upon receipt of the request, the node storing the resource key assignment feeds back a response message to the node initiating the request. Therefore, the node initiating the request may obtain the resource from the node storing the corresponding resource based on the response message. Here, the node searching for the resource key assignment (i.e. the node sending a request for searching for the resource key assignment) may be either a node within the structured P2P network, or any of external nodes.

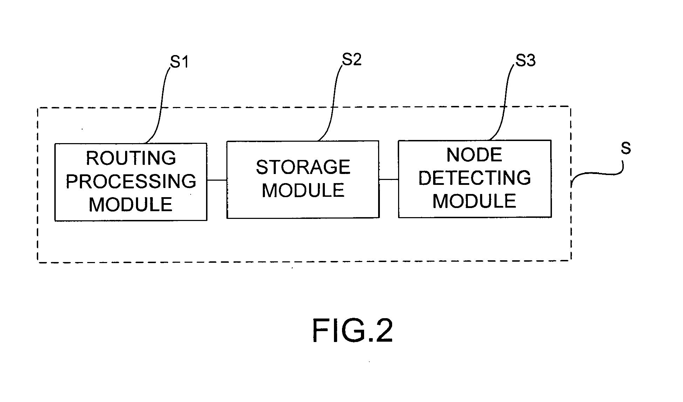

Figure 2 illustrates a structural schematic diagram of another preferred embodiment of a server of the present invention. This embodiment adds a node detecting module S3 on the basis of the embodiment in Figure 1. The node detecting module S3 is connected with the storage module S2, and detects periodically whether nodes in the structured P2P network system are normal by performing keeping alive (determining whether nodes are within the structured P2P network) to all nodes. As such, the storage module S2 may update NodeID and node status information of the nodes in time according to the keeping alive situation, and thus, the routing reliability of the server S is further ensured.

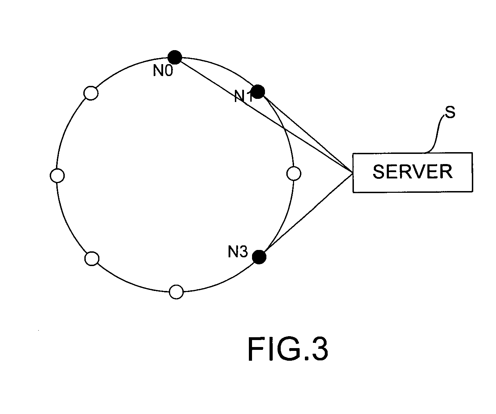

Figure 3 illustrates a structural schematic diagram of a preferred embodiment of a P2P network system of the present invention. A server S is configured in the structured network, wherein the server S is connected with all nodes N0, N1 and N3 via signals in the structured P2P network, in order to route the node searching for the resource key assignment directly to the node storing the resource key assignment, based on the stored NodeIDs and node status information of all nodes and the request for searching for the resource key assignment. As such, it merely needs two hops, i.e., the routing server S and the node storing the resource key assignment, to complete the search for resource key assignment. Therefore, it greatly saves the time for routing and speeds up the search of resource key assignment.

As such, each node in the structured P2P network or external node may accomplish searching for the resource key assignment quickly via the server S. Simultaneously, when failing to search out the resource key assignment correctly due to the malicious node or bug node in the structured P2P network, the request node may complete searching for the resource key assignment correctly via the server S.

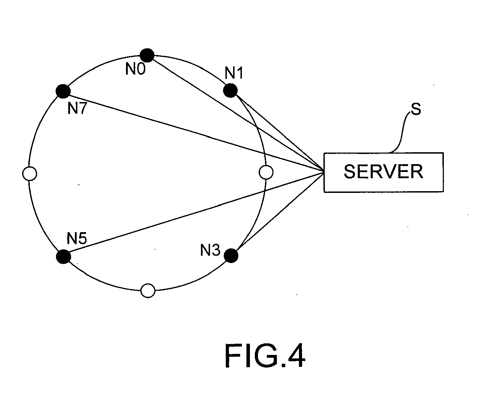

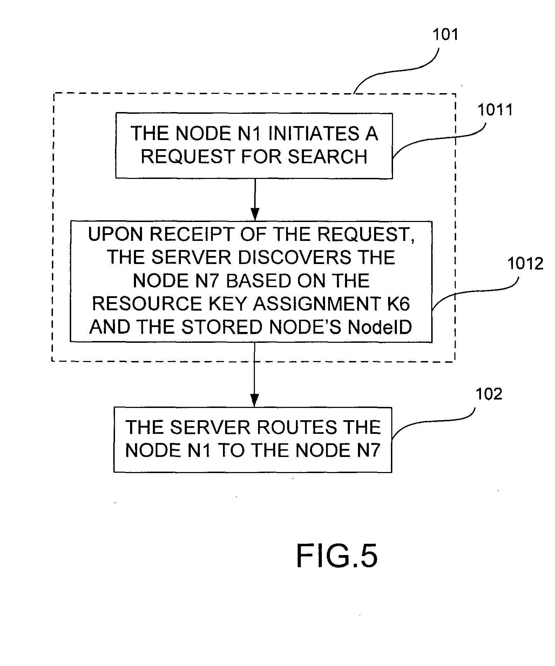

Taking chord circle as an example, suppose there are five nodes in all, i.e., N0, N1, N3, N5 and N7, in the structured P2P network with m=3, as shown in Figure 4. Then, the node N0 stores the resource key assignment K0; the node N1 stores the resource key assignment K1; the node N3 stores the resource key assignment K2 and K3; the node N5 stores the resource key assignment K4 and K5; the node N7 stores the resource key assignment K6 and K7. When the node N1 is searching for the resource key assignment K6, as shown in Figure 5, specific steps are performed as follows.

Step 101: The server S searches out the node storing the resource key assignment K6 based on the request of node N1. Specifically, the following two steps are included.

Step 1011: The node N1 initiates a request for searching for the resource key assignment K6 to the server S.

Step 1012: Upon receipt of the request initiated from the node N1 for searching for the resource key assignment K6, the server S compares NodeIDs of all nodes stored in the structured P2P network with the resource key assignment K6 in the request message. Then the node N7 with the NodeID no less than 6 and closest to 6, is the node storing the resource key assignment K6. When there is no node N7, then the node N0 with a minimal NodeID is the node storing the resource key assignment K6. In this embodiment, the node N7 is found as the node storing the resource key assignment K6.

Of course, according to different DHT policies, the node storing the resource key assignment may not certainly be the node with the NodeID no less than the key assignment and closest to the key assignment. It may be the node with the NodeID no greater than the key assignment and closest to the key assignment, and it may also be the node with a minimum absolute value of difference between the node's NodeID and the resource key assignment. Consequently, the server S needs to perform searching according to different DHT policies when searching for the node storing the resource key assignment.

Step 102: The server S routes the node N1 initiating the request for searching to the found node N7.

As such, the node N1 takes merely two hops, i.e., the server S and the node N7, to search out the resource key assignment K6, thereby saving the time for the search of the resource key assignment greatly. Furthermore, the above mentioned method for routing does not change the routing method for searching for the resource key assignment in the existing structured P2P network. Either one of the two methods for routing may serve as a backup for the other. That is, in the situation that the node storing the resource key assignment cannot be found correctly due to the malicious node or bug node in the structured P2P network, the node searching for the resource key assignment may utilize the above mentioned method for routing to search for the node storing the resource key assignment correctly. In the situation that the server S has a heavy working load, the node searching for the resource key assignment may utilize the existing routing method to search for the node storing the resource key assignment, and the relevant resource is found thereby according to the corresponding relationship between the key assignment and the node actually storing the resource.

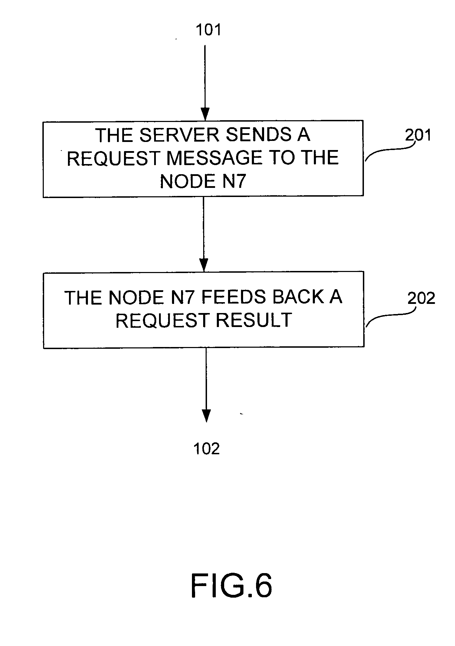

In order to further ensure the routing reliability, as shown in Figure 6, following steps are further included between step 101 and step 102.

Step 201: The server S sends a request message on whether the node N7 has stored the resource key assignment K6 to the found node N7.

Step 202: The node N7 feeds back a request result to the server S.

Upon receipt of the returned result, the server S routes the node N1 to the node N7, further ensuring that the node N1 may search out the resource key assignment K6 in the node N7.

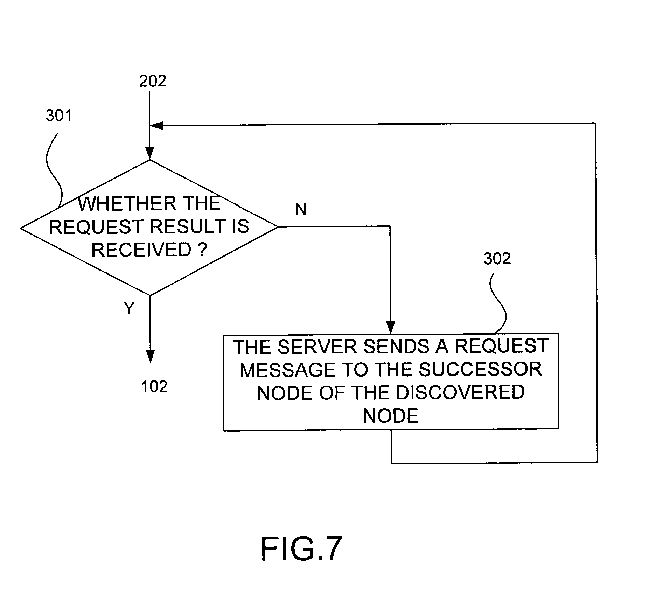

When the node N7 leaves the structured P2P network system, the resource key assignment K6 stored in the node N7 is transferred to the successor node N0, while the node N7 has not notified the server S of the leaving. Then, without being notified, the server does not remove the node N7 from the global nodes list and still initiates the request on whether the node N7 has stored the resource key assignment K6 to the node N7 Meanwhile, as shown in Figure 7, following steps are further included between step 202 and step 102.

Step 301: The server S determines whether the request result is received. If the request result is received, it is indicated that the node N7 has not left the structured P2P network, and then step 102 is performed. If not, it is indicated that the node N7 has left the structured P2P network, causing response timeout or keep alive message timeout, then step 302 is performed.

Step 302: The server S initiates a request message to the node N0, which is successive to the node N7 that receives the request message, for whether to store the resource key assignment K6.

Step 301 is performed again to determine whether the node N0 returns the request result, that is, to determine whether the node N0 is in the normal status. If the node N0 is normal, then step 102 is performed. The node N1 is routed to the node N0. If not, then step 302 is performed. The server S keeps sending the request to the node successive to the node N0 for whether to store the resource key assignment K6. Then, step 301 is performed again. The operation is repeated until the server S receives the request result.

Consequently, in the situation that the node N7 leaves the structured P2P network in an abnormal way, the node N1 may still search out the node N0 storing the resource key assignment K6 correctly.

At step 302, when the server S does not receive the request result, similarly, the server S does not certainly initiate a request message to a node successive to the node receiving the request message for whether to store the resource key assignment, based on different DHT policies. For example, when adopting the DHT policy of storing the key assignment in a node with the NodeID no greater than the key assignment and closest to the key assignment, a request message for whether to store the resource key assignment needs to be initiated to a node prior to the node receiving the request message at this time. When adopting the DHT policy of storing the key assignment in a node with a minimum absolute value of difference between the node's NodeID and the resource key assignment, a request message for whether to store the resource key assignment needs to be initiated to a node with a minimum absolute value of difference between the node's NodeID and the resource key assignment other than the node receiving the request message. Here, a node successive to the node receiving the request message, a node prior to the node receiving the request message, and a node with a minimum absolute value of difference between the node's NodeID and the resource key assignment, are collectively called the neighbor node. As such, when the server S does not receive a request result at this step, it initiates a request message for whether to store the resource key assignment to the neighbor node of the node receiving the request message.

When the node N6 is joined into the existing network, the key assignment K6 is transferred to the node N6, while the server S is not notified of the newly joined node. In this situation, the server S does not store the node N6. When the node N1 searching for the resource key assignment K6, the node found by the server S is still N7. Meanwhile, when the server S receives the request result, i.e. the response of node N7, a further determination should be made at step 301 to confirm the request result for whether to store the resource key assignment K6, in order to ensure that the node N1 may still search out the node storing the resource key assignment K6 correctly. If so, it indicates that the resource key assignment K6 has not been transferred, and step 102 is performed. If not, it indicates that the resource key assignment K6 has been transferred after the node N6 is joined, then the server S detects the nodes in the P2P network, updates the stored nodes' NodeIDs and node status information, and stores the newly joined node N6. Step 101 is performed to search for the node storing the resource key assignment K6 again, and the node N1 is routed to the node N6.

As such, in the situation that a new node joins in the P2P network system without the server S being notifying, the node N1 may still search out the node N6 storing the resource key assignment K6 correctly.

Through the above mentioned steps, the node N1 hops to the node storing the resource key assignment K6 correctly, thereby finding the resource key assignment K6 accurately and quickly.

In the structured P2P network, the transfer of resource key assignment occurs in two situations: when the node is joined into the network or the node leaves the network.

When the node N6 is joined into the structured P2P network, following steps may be performed to accomplish the transfer of resource key assignment.

The newly joined node N6 sends a request for duplicating the resource key assignment K6 to its successor node N7.

The successor node N7 transmits the resource key assignment K6 that should be under the charge of the node N6 to the node N6.

The successor node N7 deletes the resource key assignment K6 that should be under the charge of the node N6.

As such, the transfer of resource key assignment K6 is completed.

The node N6 further notifies the server S upon receipt of the resource key assignment K6, so that the server S updates the stored nodes' NodeIDs and node status information in time. Even without performing steps 201-202, 301-302, the node storing the resource key assignment might also be found correctly, thus achieving prompt and accurate routing for the node.

When the node N7 leaves the structured P2P network in a normal way, following steps may be performed to accomplish the transfer of resource key assignment.

The node N7 transmits all the resource key assignment K6 and K7 which are under the charge of the node N7 to its successor node N0.

The successor node N0 notifies the node N7 upon receipt of the resource key assignment K6 and K7.

The transfer of resource key assignment is completed in the situation that the node N7 leaves the network.

The node N7 notifies the server S of the information of the leaving upon receipt of the notification from the successor node N0. As such, the server S updates the stored nodes' NodeIDs and node status information in time. Even without performing steps 201-202, 301-302, the node storing the resource key assignment might also be found correctly, thereby achieving prompt and accurate routing for the node.

Consequently, in the structured P2P network, when the node joins into the network or the node leaves the network frequently, the node storing the resource key assignment may still be found promptly and accurately.

To achieve the transfer of resource key assignment when the node joins, the newly joined node does not certainly send a request to its successor node for duplicating the resource key assignment, based on different DHT policies. For example, when adopting the DHT policy of storing the key assignment in a node with the NodeID no greater than the key assignment and closest to the key assignment, the newly joined node needs to send the request for duplicating the resource key assignment to its predecessor node. The predecessor node transmits the resource key assignment under the charge of the newly joined node to the newly joined node and deletes the resource key assignment previously stored thereof When adopting the DHT policy of storing the key assignment in a node with a minimum absolute value of difference between the node's NodeID and the resource key assignment, the newly joined node needs to send the request for duplicating the resource key assignment to the node closest to it, i.e. the node with a minimum absolute value of difference between the NodeIDs of this node and the newly joined node. The node receiving the request transmits the resource key assignment should be under the charge of the newly to the newly joined node and deletes the resource key assignment previously stored thereof. When there is a plurality of nodes closest to the newly joined node, the newly joined node needs to send the request for duplication to these closest nodes in turn until the desired resource key assignment is obtained.

Similarly, to achieve the transfer of resource key assignment when the node is leaving, the leaving node does not certainly transmit the resource key assignment to its successor node based on different DHT policies. For example, when adopting the DHT policy of storing the key assignment in a node with the NodeID no greater than the key assignment and closest to the key assignment, the leaving node needs to transmit the resource key assignment under the charge thereof to its predecessor node. When adopting the DHT policy of storing the key assignment in a node with a minimum absolute value of difference between the node's NodeID and the resource key assignment, the leaving node needs to transmit the resource key assignment under the charge of thereof to its closest node, i.e. the node with a minimum absolute value of difference the node's NodeID and the NodeID of the leaving node.

The present invention stores all nodes' NodeIDs and node status information in the structured P2P network via a storage module, so that the node searching for the resource key assignment is directly routed to the node storing the resource key assignment via the server. Therefore, in the P2P network with such server, the node searching for the resource key assignment merely needs two hops, i.e., the server and the node storing the resource key assignment, to complete the search for key assignment, thus greatly saving the search time for routing and speeding up the search for routing. Moreover, the server detects the nodes in the structured P2P network periodically, ensuring that the nodes' NodeIDs and node status information in the structured P2P network are updated in time, and further ensuring that the search for resource key assignment can be performed correctly via the server. Furthermore, the technical solution of searching for the resource key assignment of present invention does not change the existing method for searching for the resource key assignment. In the structured P2P network where malicious node or bug node exists, when the search for resource key assignment cannot be correctly performed using the existing method for searching for the resource key assignment, it may directly request the server for accurate searching. In the process of transferring resource key assignment, by notifying the server of the information of joining or leaving after duplicating the resource key assignment, the server can update stored nodes' NodeIDs and node status information in time, further ensuring accurate and reliable routing for the resource key assignment.

When the method for routing and the method for transferring resource key assignment according to the present invention are embodied in standalone software, the software may be stored in any type of computer readable storage medium. For instance, the software may be stored in a record medium, e.g. a disc medium capable of being inserted in a computer system drive, and storing information in the form of magnetic, optical or magnetooptical; or be stored in a fixed record medium in a computer system, e.g. a hard disc drive, or be stored in a solid computer storage. In the P2P network system, node computer system and server can read the software stored in the storage medium, and perform the software to accomplish the resource key assignment searching and transferring.

Apparently, any variations or modifications can be readily appreciated by those skilled in the art without departing from the spirit and scope of the present invention. As such, if these variations or modifications fall within the scope of the claims of the present invention and the equivalent techniques, these variations or modifications are intended to be included in the present invention.

## Claims

1. A server, **characterized by** comprising: a routing processing module and a storage module connected therewith, wherein:
the storage module is configured to store node identifiers (NodeIDs) of all nodes in a structured P2P network, and the routing processing module is configured to search, upon receipt of a request from a node for searching for a resource key assignment, for a node storing the resource key assignment based on the NodeID stored in the storage module, and to route the node sending the request for searching for the resource key assignment to the node storing the resource key assignment.

2. The server of claim 1, **characterized in that,** the storage module is further connected with a node detecting module, which is configured to detect the nodes in the structured P2P network periodically and to update the NodeID stored in the storage module according to a detecting result.

3. A P2P network system, comprising a structured P2P network, **characterized in that,** a server is configured in the structured P2P network, wherein the server is connected with all nodes via signals within the structured P2P network, and the server is configured to search, upon receipt of a request for searching for a resource key assignment, for a node storing the resource key assignment based on NodeID of all nodes stored in the structured P2P network, and to route a node sending the request for searching for the resource key assignment to the node storing the resource key assignment,.

4. A method for routing in a P2P network, **characterized by** comprising:
step 1, searching for, by a server in the P2P network, a node storing a resource key assignment based on the resource key assignment in a request and stored NodeIDs, upon receipt of the request initiated by a node searching for the resource key assignment;
step 2, routing, by the server, the node that initiates the request for searching to the found node.

5. The method of claim 4, **characterized by**, between the step 1 and step 2, further comprising:
step 11, sending, by the server, to the found node a request message for whether has stored the resource key assignment;
step 12, feeding back, by the found node, a request result to the server.

6. The method of claim 5, **characterized by**, between the step 12 and step 2, further comprising:
step 21, determining, by the server, whether the request result is received, if the request result is received , performing step 2; if the request result is not received, performing step 22;
step 22, initiating, by the server, a request message for whether has stored the resource key assignment, to a neighbor node of the node receiving the request message, performing step 21.

7. The method of claim 6, **characterized by**, in the step 21, further comprising:
determining, by the server, upon receipt of the request result, whether the request result confirms that the resource key assignment is stored, if the request result confirms that the resource key assignment is stored, step 2 is performed; if the request result does not confirm that the resource key assignment is stored, the server detects the nodes in the P2P network and updates the stored nodes' NodeID and the node status information, and step 1 is performed.

8. The method of any one of claims 4-7, **characterized in that,** in the step 1, the step of searching for the node storing the resource key assignment comprises:
comparing, by the server, the stored NodeIDs with the resource key assignment,
regarding a node with a NodeID no less than the resource key assignment and closest to the resource key assignment as the node storing the resource key assignment; or,
regarding a node with a NodeID no greater than the resource key assignment and closest to the resource key assignment as the node storing the resource key assignment; or,
regarding a node that has a minimum absolute value of difference between the node's NodeID and the NodeID of the node sending the request for searching for the resource key assignment, as the node storing the resource key assignment.

9. A method for transferring resource key assignment in a P2P network, **characterized by** comprising:
sending, by a newly joined node, a request for duplicating a resource key assignment to its neighbor node;
transmitting, by the neighbor node, the resource key assignment to the newly joined node, wherein the resource key assignment should be under the charge of the newly joined node;
deleting, by the neighbor node, the resource key assignment under the charge of the newly joined node;
notifying, by the newly joined node, a server that transferring of the resource key assignment is completed, upon receipt of the resource key assignment.

10. The method for transferring resource key assignment of claim 9, **characterized in that,** the server updates the stored NodeID upon receipt of the notification.

11. The method for transferring resource key assignment of claim 9, **characterized in that,** the neighbor node comprises: a successor node, a predecessor node, or a node with a minimum absolute value of difference between the NodeID of this node and the newly joined node.

12. A method for transferring resource key assignment in a P2P network, **characterized by** comprising:
transmitting, by a leaving node, all resource key assignment under the charge thereof to its neighbor node;
notifying, by the neighbor node, the leaving node upon receipt of the resource key assignment;
notifying, by the leaving node, a server of the leaving information upon receipt of the notification from the neighbor node.

13. The method for transferring resource key assignment of claim 12, **characterized in that,** the server updates the stored NodeIDs upon receipt of the notification.

14. The method for transferring resource key assignment of claim 12, **characterized in that,** the neighbor node comprises: a successor node, a predecessor node, or a node with a minimum absolute value of difference between the NodeIDs of this node and the leaving node.
